# EUROPEAN PATENT APPLICATION

(11) **EP 4 389 327 A1**
(43) Date of publication of application: **26.06.2024**
(21) Application number: 22216091.3
(22) Date of filing: 22.12.2022
(51) Int. Cl.: B23B 27/00, B23B 27/14

(54) **TURNING TOOL AND CUTTING INSERT THEREFOR**

(71) Applicant: AB Sandvik Coromant, 811 81 Sandviken (SE)
(72) Inventor: WIKBLAD, Krister, 811 81 Sandviken (SE); WICKSTRÖM, David, 811 81 Sandviken (SE); LÖF, Ronnie, 811 81 Sandviken (SE)
(74) Representative: Sandvik

(57) **Abstract**

The invention relates to a cutting insert (1, 40, 90) for a turning tool, the cutting insert comprising a first side (2) and a second side (3) arranged opposite each other and facing opposite directions, the first and second sides generally extending in respective first and second planes (Pl, P2) that are parallel to each other, wherein the first side (2) comprises a first rake face (11). A central axis (L) of the cutting insert extends from the first side (2) to the second side (3) in a direction perpendicular to the first and second planes (Pl, P2). The cutting insert comprises a peripheral surface (4) connecting the first side (2) and the second side (3), wherein the peripheral surface (4) includes a first relief surface (7) extending in parallel, or substantially in parallel, to the central axis. A first cutting edge (5) is arranged at the intersection between the first relief surface (7) and the first rake face (11), wherein the first cutting edge (5) comprises a first nose cutting edge (51). The cutting insert has a maximum thickness (t) measured from the first side (2) to the second side (3) in a direction parallel to the central axis (L), and the first relief surface (7) adjacent the first nose cutting edge (51) has a length of extension (h) in a direction parallel to the central axis (L) that is less than 75% of the maximum thickness (t) of the cutting insert (1). The invention also relates to a turning tool (10) comprising such cutting insert.

## Description

### TECHNICAL FIELD

The invention relates to metal cutting, and in particular to turning operations wherein a turning tool is used for machining a rotating workpiece.

### BACKGROUND ART

Within the field of metal cutting, a turning tool may be used for machining the surface of a rotating workpiece, for example the inner surface of a hole in the workpiece. This is referred to as internal turning or boring. In such machining operations, the tool may extend along a central axis that is parallel to the rotational axis of the workpiece.

The turning tool usually includes a cutting insert made of a wear resistant material, such as cemented carbide, which is arranged to engage the workpiece surface. For external turning operations, cutting inserts with a negative basic shape, i.e. cutting inserts with no inherent clearance angel, are commonly used. A negative cutting insert has the advantage of high cutting edge strength and is suitable for heavy cutting conditions. However, for internal turning operations, positive cutting inserts are usually used, i.e. cutting inserts having an inherent clearance angle, to ensure clearance with respect to the workpiece surface.

EP3456442 discloses a turning tool for internal turning with cutting inserts having a negative basic shape. The required clearance is achieved by appropriate placement and orientation of the cutting insert within the tool body. However, if tilting the cutting insert too much, this may result in less favorable cutting conditions, for example with respect to chip breaking.

Hence, there is a need for improved turning tools for internal turning operations.

### SUMMARY

It is an object of the present invention to mitigate the shortcomings of the prior art and to provide an improved cutting insert with good accessibility and high strength, and a turning tool to be used therewith for internal turning operations.

Thus, according to a first aspect, the invention relates to a cutting insert for a turning tool, wherein the cutting insert comprises a first side and a second side arranged opposite each other and facing opposite directions, the first and second sides generally extending in respective first and second planes that are parallel to each other, wherein the first side comprises a first rake face. A central axis extends from the first side to the second side in a direction perpendicular to the first and second planes. The cutting insert further comprises a peripheral surface connecting the first side and the second side, wherein the peripheral surface includes a first relief surface extending in parallel, or substantially in parallel, to the central axis. A first cutting edge is arranged at the intersection between the first relief surface and the first rake face, wherein the cutting edge comprises a first nose cutting edge. The cutting insert has a maximum thickness measured from the first side to the second side in a direction parallel to the central axis. The first relief surface adjacent the first nose cutting edge has a length of extension in a direction parallel to the central axis that is less than 75% of the maximum thickness of the cutting insert.

Thereby, an increased clearance to the machined surface in internal turning operations is obtained without compromising the strength of the cutting insert.

The first relief surface is parallel to the central axis of the cutting insert, meaning that the cutting insert has a negative basic shape. For increased stability, it may be preferred that a turning tool used for internal turning, and a cutting insert arranged thereto, is as large as allowed by the diameter of the hole being machined. The inventors have found that the strength of a cutting insert, which is partly provided by a thickness of the cutting insert, may be maintained to a sufficient extent even if reducing the length of the relief surface, i.e. the part of the peripheral surface closest to the inner wall of the machined hole. Thereby, an increased clearance to the machined surface is obtained. This is particularly useful when machining small holes where the size of the cutting tool and the cutting insert is very much limited by the available space in the hole.

Hence, with a design according to the invention, a relatively thick cutting insert with a negative basic shape can be used for internal turning with reduced risk of rubbing between the relief surface and the machined surface.

Even though some cutting inserts according to the prior art may have surfaces that are slightly axially elevated with respect to the cutting edge and/or the trailing edge of the relief surface, such elevation is smaller than what is suggested in the present invention and not used for improving clearance but is mainly an effect of the production process and/or to facilitate secure mounting of the cutting insert within an insert seat.

The first relief surface adjacent the first nose cutting edge may have a length of extension in a direction parallel to the central axis that varies slightly along the nose cutting edge, i.e. the nose cutting edge may be curved in a side view. However, according to the present disclosure, the length of extension of the first relief surface is less than 75% of the maximum thickness of the cutting insert at all locations along the nose cutting edge, and in particular at the location of the nose cutting edge where such length of extension is the greatest.

A "turning tool" should be understood as a cutting tool used for machining a rotating workpiece. Such tool, in the context of machining the internal surface of a hole in a rotating workpiece, is sometimes also referred to as a boring bar. The central axis of such turning tool is parallel, but usually not coaxial, with the rotation axis of the workpiece, and the turning tool can be moved radially within the hole to engage the surface of the workpiece. Thereby, a varying internal profile of the hole can be machined by changing the radial displacement between the turning tool and the rotation axis of the workpiece.

The term "cutting edge" as used herein, if not specified otherwise, should be understood as the combination of cutting edge segments that together form a complete cutting edge, potentially comprising multiple cutting edge segments such as a nose cutting edge, a primary cutting edge and a secondary cutting edge. Thus, according to the present disclosure, each cutting edge of the cutting insert may include not only a nose cutting edge, but also a primary cutting edge and possibly also a secondary cutting edge, wherein the primary cutting edge may extend from one end of the nose cutting edge and the secondary cutting edge may extend from the other end of the nose cutting edge. Thus, a cutting insert according to the invention may comprise a first cutting edge including a first primary cutting edge, a first secondary cutting edge and a first nose cutting edge.

Each of such primary and secondary cutting edges may be straight in a plan view of the first or second sides. The nose cutting edge may be convexly curved in a plan view, i.e. preferably arc-shaped. In such view, the nose cutting edge may be formed by a single radius, e.g. connecting the primary cutting edge to the secondary cutting edge, or it may include multiple curved segments of different radii.

The first and second sides generally extend in respective first and second planes that are parallel to each other. This means that at least significant portions of the first and second sides extend in such planes. At least some parts of the first and the second sides may be flat surfaces, at least some of which extend in the respective first and second planes, but the first and second sides may also include various geometrical formations including recesses or protrusions for changing the cutting geometry and improving the chip breaking, for example, and may also include regions with flat or curved surfaces that are oblique or extend perpendicular to the first and second planes.

The central axis of the cutting insert extends from the first side to the second side, through a geometric center of the cutting insert, and perpendicular to the first and second planes in which the respective first and second sides generally extend. The cutting insert may comprise a through-hole that opens in the first and second sides and that can be used for fastening the cutting insert within an insert seat of a tool body using a fastening element, such as a screw. The through-hole may extend along the central axis of the cutting insert and may be circular in cross sections perpendicular to a central axis.

The cutting insert according to the invention is primarily intended and adapted for longitudinal turning, i.e. wherein the feed direction is parallel to the rotational axis of the work piece. In longitudinal turning, a primary cutting edge may be arranged to function as a leading cutting edge whereas the nose cutting edge is arranged to generate a surface which is cylindrical or concentric with the rotational axis of the metal work piece.

According to some embodiments, the first relief surface adjacent the first nose cutting edge has a length of extension in a direction parallel to the central axis that is more than 30% of the maximum thickness of the cutting insert, and may for example be between 40% and 70% of the maximum thickness of the cutting insert.

By having a length of extension of the relief surface that is at least 30%, and for example between 40% and 70%, of the maximum thickness, an optimal trade-off between obtained clearance and strength of the cutting insert may be achieved.

According to some embodiments, the maximum thickness of the cutting insert is between 3 mm and 6 mm, whereas the length of extension of the relief surface is between 1 mm and 4.5 mm. As an example, for a cutting insert having a maximum thickness of 3 mm, the relief surface may have a length of extension between 1 mm and 2.25 mm, for example approximately 2 mm, and for a cutting insert having a maximum thickness of 6 mm, the relief surface may have a length of extension between 2 mm and 4.5 mm, for example approximately 4 mm.

The second side of the cutting insert may comprise a contact surface arranged to abut a support surface in an insert seat of a turning tool. Such contact surface may be at least partly formed by a flat surface portion of the second side that extends in the second plane, and which may be located in a region of the second side around the central axis of the cutting insert, e.g. adjacent the opening of a through-hole extending through the cutting insert along the central axis. The second side may comprise a transition region extending from such contact surface to the first relief surface. The transition region may include an inclined surface portion that is oblique to the central axis. In other words, the transition between the shortened relief surface and the contact surface of the cutting insert is preferably not formed simply by one or more 90° steps (i.e. with one section extending in parallel with the second plane from the relief surface and another section extending in parallel with the central axis towards the contact surface), but includes at least some section that is inclined with respect to the second plane and the central axis. This may be preferred with regards to the production of the cutting insert, and such transition from the relief surface to the contact surface will also be less fragile, and the strength of the cutting insert essentially maintained.

According to some embodiments, the transition region extends, from a point of intersection between the first relief surface and the transition region, and in a direction along a radial line towards the central axis of the cutting insert, a distance that is at least 10% of the total distance along such radial line from the point to the central axis. Thereby, the transition region provides for a significant recession of the relief surface, thus assuring sufficient clearance to the machined surface. The extension of the transition region may be greatest at the intersection between the transition region and the first relief surface adjacent the first nose cutting edge. As an example, the transition region may extend a distance of at least 0.5 mm from a point of intersection between the first relief surface and the transition region in a direction along a radial line towards the central axis of the cutting insert.

The first cutting edge may include a first primary cutting edge that is connected to the first nose cutting edge and extends therefrom along the intersection between the first relief surface and the first rake face. According to some embodiments, the distance from such first primary cutting edge to the second side is decreasing away from the first nose cutting edge. Hence, according to such embodiments, in a side view of the cutting insert, the primary cutting edge does not extend in parallel with the first and second sides, but are sloping away from the nose cutting edge. It other embodiments, at least a part of the first primary cutting edge may extend in parallel with the first and second sides.

The cutting insert may include multiple relief surfaces, rake faces and corresponding cutting edges formed at the intersection therebetween. In other words, the cutting insert may be indexable, such that different cutting edges may be located at an active position for machining the workpiece depending on in what orientation the cutting insert is mounted in an insert seat of a turning tool body. The relief surfaces of all cutting edges will extend parallel to each other, and in parallel, or substantially in parallel, to the central axis.

Thus, according to some embodiments, the peripheral surface comprises a second relief surface, and the first side or the second side comprises a second rake face, wherein a second cutting edge is arranged at the intersection between the second relief surface and the second rake face, the second cutting edge comprising a second nose cutting edge, and wherein the second relief surface adjacent the second nose cutting edge has a length of extension in a direction parallel to the central axis that is less than 75% of the maximum thickness of the cutting insert.

Thus, both of the first and the second relief surfaces of such indexable cutting insert has a length of extension in a direction parallel to the central axis that is less than 75% of the maximum thickness of the cutting insert.

Hence, according to some embodiments, the peripheral surface includes a first and a second relief surface, whereas the first side includes a first rake face and the second side includes a second rake face, wherein a first cutting edge comprising a first nose cutting edge is arranged at the intersection between the first relief surface and the first rake face, and a second cutting edge comprising a second nose cutting edge is arranged at the intersection between the second relief surface and the second rake face, and wherein each of the first and the second relief surfaces adjacent the first and the second nose cutting edges, respectively, has a length of extension in a direction parallel to the central axis of the cutting insert that is less than 75% of the maximum thickness of the cutting insert. The first and the second relief surfaces may be arranged on opposite sides, or substantially opposite sides, of the peripheral surface.

According to other embodiments, the second side may comprise a first opposing rake face opposite the first rake face, wherein a first opposing cutting edge is arranged at the intersection between the first opposing rake face and the first relief surface. The first opposing cutting edge preferably has a similar design as the first cutting edge and thus comprises a first opposing nose cutting edge. Accordingly, the cutting insert may be double-sided, i.e. with cutting edges arranged at opposite ends of the first relief surface, such that the cutting insert can be indexed simply by reversing the cutting insert within the insert seat. The first relief surface acts as relief surface for both the first cutting edge and for the first opposing cutting edge. Accordingly, the first relief surface adjacent the first opposing nose cutting edge has a length of extension in a direction parallel to the central axis that is less than 75% of the maximum thickness of the cutting insert.

For such embodiments, at least a part of the transition region at the second side is formed by the first opposing rake face.

The cutting insert may also have a second relief surface, a second rake face arranged at the first side, and a second opposing rake face arranged at the second side, such that the cutting insert has a first and a second cutting edge arranged at the respective intersections between the first side and the first and second relief surfaces, as well as a first and a second opposing cutting edge arranged at respective intersections between the second side and the first and second relief surfaces. In other words, the cutting insert may be indexable four times.

According to some embodiments, the cutting insert has a rhombic, or substantially rhombic, basic shape in a plan view of the first or second side. However, the cutting insert may also have other shapes suitable for turning.

According to another aspect, the invention relates to a turning tool comprising a tool body that includes an insert seat in which a cutting insert according to any of the embodiments described herein is mounted.

The turning tool may be arranged to machine a metal workpiece, and may include a front end where the cutting insert is mounted, and a rear end which is adapted to be clamped directly or indirectly to a machine interface of a machine tool, such as a Computerized Numerical Control (CNC) lathe.

### BRIEF DESCRIPTION OF DRAWINGS

The solution will now be described in more detail by means of exemplary embodiments and with reference to the accompanying drawings, in which:
Fig. 1 is a perspective view of a cutting insert according to a first embodiment.
Fig. 2 is a top view of the cutting insert according to the first embodiment.
Figs. 3-5 are side views of the cutting insert according to the first embodiment as seen from directions III-V indicated in Fig. 2.
Fig. 6 illustrates a turning tool according to an embodiment of the invention during an internal turning operation on a workpiece, wherein the turning tool comprises the cutting insert shown in Figs. 1-5.
Fig. 7 is a view of the turning tool and the workpiece in a section VII-VII indicated in Fig. 6.
Fig. 8 is an enlarged view of a part of the turning tool and the workpiece illustrated in Fig. 7.
Fig. 9 is a perspective view of a cutting insert according to a second embodiment.
Fig. 10 is a top view of the cutting insert according to the second embodiment.
Fig. 11 is a side view of the cutting insert according to the second embodiment.
Fig. 12 is a perspective view of a cutting insert according to a third embodiment.
Fig. 13 is a top view of the cutting insert according to the third embodiment.
Fig. 14 is a side view of the cutting insert according to the third embodiment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

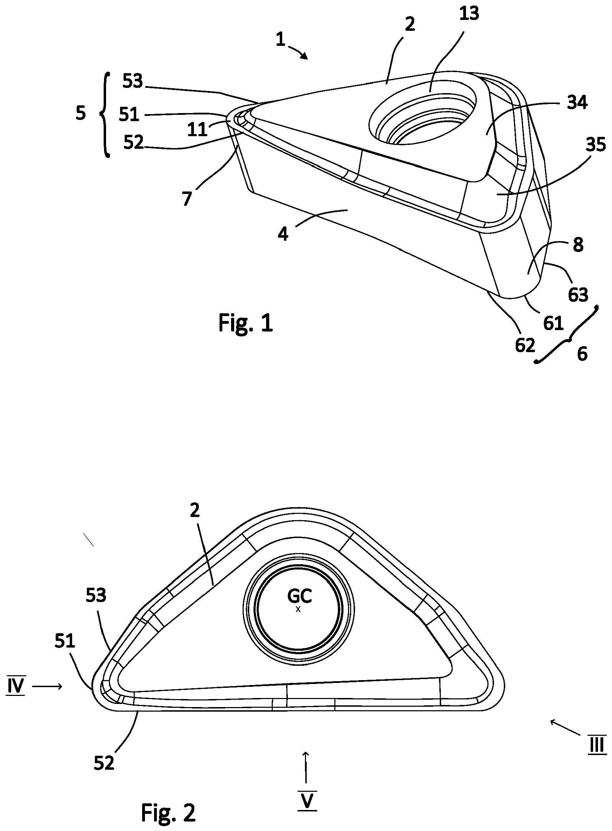

With reference to Figs. 1-5, a cutting insert 1 according to an embodiment of the invention will now be described.

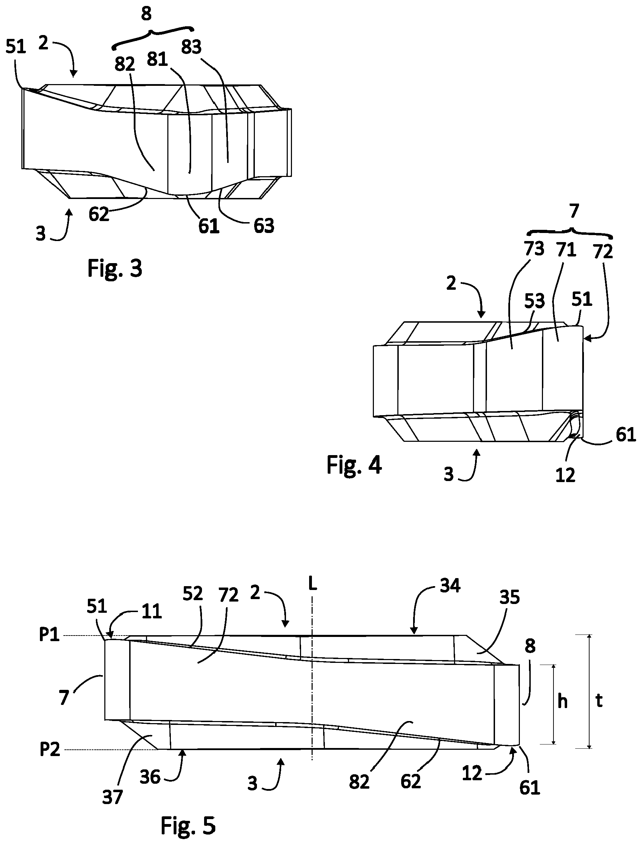

The cutting insert 1 has a first side 2, a second side 3 and a peripheral surface 4 connecting the first and second sides 2, 3. The first and second sides 2, 3 face opposite directions and generally extend in respective first and second planes P1, P2 (illustrated in Fig. 5) that are parallel to each other. A central axis L (also illustrated in Fig. 5) extends from the first side 2 to the second side 3 and is perpendicular to the parallel planes P1, P2. The central axis L passes through a geometric center GC of the cutting insert. A through-hole 13 extends along the central axis L.

The peripheral surface 4 comprises a first relief surface 7 and a second relief surface 8. The first side 2 comprises a first rake face 11, and the second side 3 comprises a second rake face 12. At the interface between the first relief surface 7 and the first rake face 11, a first cutting edge 5 is formed. At the interface between the second relief surface 8 and the second rake face 12, a second cutting edge 6 is formed.

The first cutting edge 5 includes a first nose cutting edge 51, a first primary cutting edge 52 and a first secondary cutting edge 53. Accordingly, the first relief surface 7 also includes a first nose relief surface 71, a first primary relief surface 72 and a first secondary relief surface 73 (illustrated in Fig. 4).

In a corresponding way, the second cutting edge 6 includes a second nose cutting edge 61, a second primary cutting edge 62 and a second secondary cutting edge 63, whereas the second relief surface 8 includes a second nose relief surface 81, a second primary relief surface 82 and a second secondary relief surface 83 (illustrated in Fig. 3).

The relief surfaces 7 and 8 are parallel with the central axis L.

As best seen in Fig. 5, the first side 2 includes a first flat contact surface 34 extending in the first plane P1 and a first transition region 35 extending from the second relief surface 8 to the first contact surface 34. A major part of the surface of the first transition region 35 is arranged oblique to the central axis L, thus extending in an inclined manner with respect to the central axis L and the first plane P1. The second side 3 includes a second flat contact surface 36 extending in the second plane P2 and a second transition region 37 extending from the first relief surface 7 to the second contact surface 36. The second transition region 37 is arranged in a corresponding way as the first transition region 35.

Each of the first and second nose cutting edges 51 and 61 is convexly curved in a plan view, as best seen in Fig. 2, whereas the first and the second primary and secondary cutting edges 52, 53, 62, 63 are straight in such view. Hence, the first and the second primary and secondary relief surfaces 72, 73, 82, 83 are flat surfaces, whereas the nose relief surfaces 71, 81 are convex surfaces, each formed by a single radius, connecting the respective primary and secondary relief surfaces. In a side view, the first and the second primary and secondary cutting edges 52, 53, 62, 63 are sloping away from the first and the second nose cutting edges 51, 61, respectively.

Accordingly, as seen in Figs. 3-5, the distance from the first primary cutting edge 52 to the second side 3 is decreasing away from the first nose cutting edge 51, and the distance from the second primary cutting edge 62 to the first side 2 is decreasing away from the second nose cutting edge 61. Correspondingly, the distance from the first secondary cutting edge 53 to the second side 3 is decreasing away from the first nose cutting edge 51, and the distance from the second secondary cutting edge 63 to the first side 2 is decreasing away from the second nose cutting edge 61.

The first primary relief surface 72 and the second primary relief surface 82 adjoin each other and are located on the same flat sub-surface of the peripheral surface 4, which is best seen in Fig. 5.

As best seen in Fig. 5, the length of extension h of each of the first and the second relief surfaces 7, 8 adjacent the respective first and second nose cutting edges 51, 61, in directions parallel to the central axis L, is much smaller than the total thickness t of the cutting insert. In this first embodiment, the length of extension h is approximately 70% of the total thickness t. The relief surfaces 7, 8 have their maximum lengths of extension in directions parallel to the central axis L at points along the nose cutting edges 51, 61. Thus, in this embodiment the maximum length of extension of each of the first and the second relief surfaces 7, 8 in a direction parallel to the central axis L is approximately 70% of the total thickness t of the cutting insert 1.

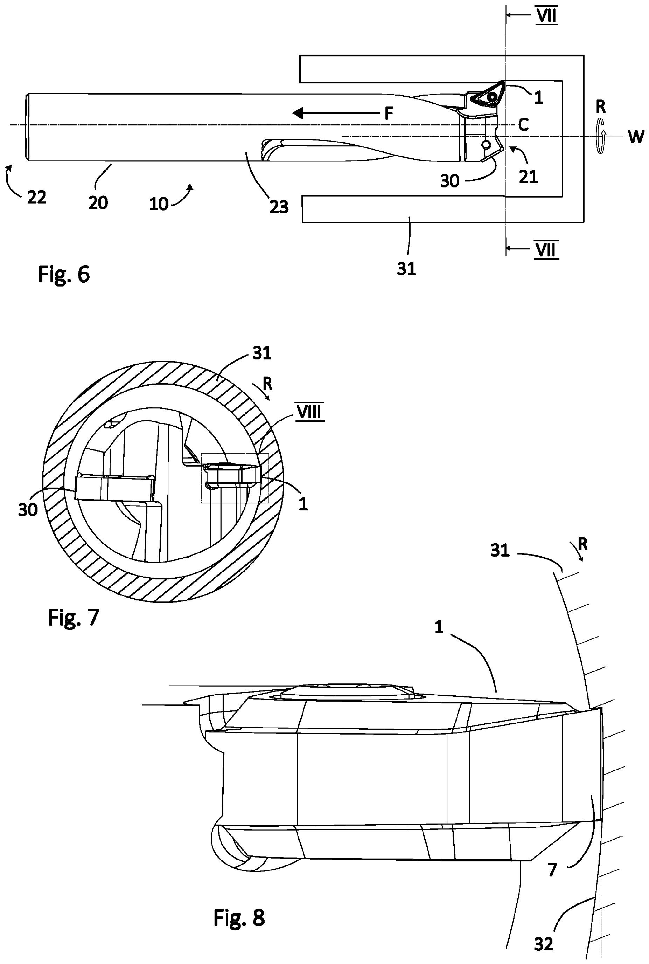

Figs. 6-8 illustrate a turning tool 10 including a tool body 20 according to an embodiment of the invention, engaged in an internal turning operation for machining a workpiece 31 along a feed direction F wherein the workpiece 31 rotates around a spindle axis W in a rotation direction R. The tool body 20 has a front end 21, a rear end 22 and a tool body central axis C extending longitudinally through the tool body from the front end 21 to the rear end 22.

Although not shown in Fig. 6, the workpiece 31 and the turning tool 10 are arranged in a machine tool, such as a computerized numerical control (CNC) lathe.

A tool body peripheral surface 23 connects the front end 21 and the rear end 22. Flutes 26 for evacuating chips are formed in the tool body peripheral surface 23. The tool body 20 further comprises a first insert seat and a second insert seat formed in the interface between the front end 21 and the tool body peripheral surface 23. The first and second insert seats are located on opposite sides relative to the tool body central axis C.

A threaded hole is located in each of the insert seats. A cutting insert 1 according to Figs. 1-5 is mounted in the first insert seat, using a screw extending through the through-hole 13 in the cutting insert 1 and into the threaded hole in the first insert seat. A second cutting insert 30 is likewise mounted in the second insert seat. The second cutting insert 30 is different from the first cutting insert 1 and is used in different machining operations. For example, the turning tool 10 may be controlled such that the second cutting insert 30 first engages the surface of the rotating workpiece 31 when machining in a forward direction, for example into a hole in the workpiece, whereas the turning tool 10 thereafter may be controlled such that the first cutting insert 1 engages the workpiece 31 when machining in a rearward direction, e.g. out of the hole.

As seen in Figs. 7-8, the cutting insert 1 is engaged in machining the inner surface 32 of a hole in the workpiece 31. For an efficient machining process, it is important that the clearance between the relief surface 7 and the machined surface 32 is sufficient. In the illustrated embodiment, sufficient clearance is obtained by having a shortened relief surface 7, as described previously with reference to Fig. 5. As indicated by a dotted line in Fig. 8, a relief surface 7 with a greater length of extension would have interfered with the machined surface 32, causing rubbing between the workpiece and the cutting insert which would adversely affect the tool life and the quality of the machined surface.

Since a major part of the cutting insert 1 still has a thickness corresponding to the maximum thickness t of the cutting insert, the strength of the cutting insert 1 is not significantly affected by the shortened relief surface 7.

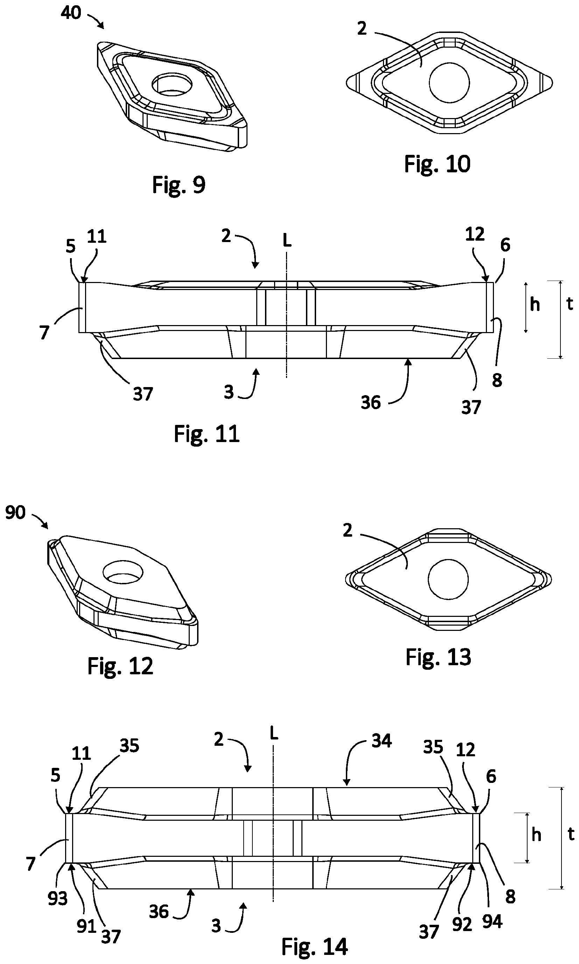

Figs. 9-11 are schematic illustrations of a cutting insert 40 according to a second embodiment. The cutting insert 40 differs from the cutting insert 1 in the first embodiment in that it has a different shape in a top view, namely a substantially rhombic shape, as best seen in Fig. 10, and in that the second rake face 12 is arranged on the first side 2, i.e. such that the first and the second cutting edges 5, 6 are formed at intersections between the first side 2 and the first and the second relief surfaces 7, 8, respectively. As for the first embodiment, the second side 3 of the cutting insert includes a flat contact surface 36 and transition regions 37 extending between the contact surface 36 and the respective first and second relief surfaces 7, 8. In this second embodiment, the maximum length of extension h of each of the first and the second relief surfaces 7, 8 adjacent the respective nose cutting edges of the first and second cutting edges 5,6, in a direction parallel to the central axis L, is approximately 60% of the total thickness t of the cutting insert 40.

Figs. 12-14 are schematic illustrations of a cutting insert 90 according to a third embodiment. The cutting insert 90 differs from the cutting insert 40 in the second embodiment in that it is double-sided, i.e. it includes first and second opposed rake faces 91, 92 arranged on the second side 3, and corresponding first and second opposed cutting edges 93, 94 formed at the intersections between the first and second relief surfaces 7, 8 and the first and second opposed rake faces 91, 92, respectively. In such embodiment, the first transition regions 35 of the first side 2 that extend between the first contact surface 34 and the first and second relief surfaces 7, 8, are at least partly formed by the first and second rake faces 11,12, whereas the second transition regions 37 of the second side 3 that extend between the second contact surface 36 and the first and second relief surfaces 7,8, are at least partly formed by the first and the second opposed rake faces 91, 92. In this third embodiment, the maximum length of extension h of each of the first and the second relief surfaces 7, 8 adjacent the respective nose cutting edges of the first and second cutting edges 5,6, in a direction parallel to the central axis L, is approximately 50% of the total thickness t of the cutting insert 90.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A cutting insert (1, 40, 90) for a turning tool, the cutting insert comprising:
- a first side (2) and a second side (3) arranged opposite each other and facing opposite directions, the first and second sides generally extending in respective first and second planes (P1, P2) that are parallel to each other, wherein the first side comprises a first rake face (11);
- a central axis (L) extending from the first side (2) to the second side (3) in a direction perpendicular to the first and second planes (P1, P2);
- a peripheral surface (4) connecting the first side (2) and the second side (3), wherein the peripheral surface (4) includes a first relief surface (7) extending in parallel, or substantially in parallel, to the central axis (L); and
- a first cutting edge (5) arranged at the intersection between the first relief surface (7) and the first rake face (11), wherein the first cutting edge comprises a first nose cutting edge (51);
wherein the cutting insert has a maximum thickness (t) measured from the first side (2) to the second side (3) in a direction parallel to the central axis (L), **characterized in that** the first relief surface (7) adjacent the first nose cutting edge (51) has a length of extension (h) in a direction parallel to the central axis (L) that is less than 75% of the maximum thickness (t) of the cutting insert.

2. A cutting insert according to claim 1, wherein the first relief surface adjacent the first nose cutting edge has a length of extension (h) in a direction parallel to the central axis that is more than 30 % of the maximum thickness (t) of the cutting insert.

3. A cutting insert according to any of the previous claims, wherein the first relief surface adjacent the first nose cutting edge has a length of extension (h) in a direction parallel to the central axis that is between 40% and 70% of the maximum thickness (t) of the cutting insert.

4. A cutting insert according to any of the previous claims, wherein the second side comprises a contact surface (36) arranged to abut a support surface in an insert seat of a turning tool.

5. A cutting insert according to claim 4, wherein the second side comprises a transition region (37) extending from the contact surface (36) to the first relief surface (7).

6. A cutting insert according to claim 5, wherein the transition region (37) includes an inclined surface portion that is oblique to the central axis (L).

7. A cutting insert according to any of the claims 5 and 6, wherein, from a point of intersection between the first relief surface (7) and the transition region (37), and in a direction along a radial line towards the central axis (L), the transition region (37) extends a distance that is at least 10% of the total distance along such radial line from the point to the central axis (L).

8. A cutting insert according to any of the previous claims, wherein the first cutting edge (5) includes a first primary cutting edge (52) that is connected to the first nose cutting edge (51) and extends therefrom along the intersection between the first relief surface (7) and the first rake face (11).

9. A cutting insert according to claim 8, wherein the distance from the first primary cutting edge (52) to the second side (3) is decreasing away from the first nose cutting edge (51).

10. A cutting insert according to any of the previous claims, wherein the peripheral surface comprises a second relief surface (8), and the first side (2) or the second side (3) comprises a second rake face (12), and wherein a second cutting edge (6) is arranged at the intersection between the second relief surface (8) and the second rake face (12), wherein the second cutting edge (6) comprises a second nose cutting edge (61), and the second relief surface (8) adjacent the second nose cutting edge (61) has a length of extension (h) in a direction parallel to the central axis (L) that is less than 75% of the maximum thickness (t) of the cutting insert.

11. A cutting insert (90) according to any of the previous claims, wherein the second side (3) comprises a first opposing rake face (91) opposite the first rake face (11), and wherein a first opposing cutting edge (93) is arranged at the intersection between the first opposing rake face (91) and the first relief surface (7).

12. A cutting insert (40, 90) according to any of the previous claims, wherein the cutting insert has a rhombic, or substantially rhombic, basic shape in a plan view of the first or second side.

13. A turning tool (10) comprising tool body (20) including an insert seat in which a cutting insert (1, 40, 90) according to any of the claims 1-12 is mounted.
